# FASCICULE DE BREVET EUROPEEN

(11) **EP 1 770 059 B1**
(45) Date de publication et mention de la délivrance du brevet: **29.10.2008**
(21) Numéro de dépôt: 06291448.6
(22) Date de dépôt: 14.09.2006
(51) Int. Cl.: C01B 3/38, B01J 8/06

(54) **Procédé de production de gaz de synthèse par vaporéformage et oxydation partielle**
Verfahren zur Herstellung von Synthesegas durch Dampfreformieren und partielle Oxidation
Process for the production of synthesis gas by steam reforming and partial oxidation

(30) Priorité: 21.09.2005 FR 0509670
(43) Date de publication de la demande: 04.04.2007
(73) Titulaire: Institut Français du Pétrole, 92852 Rueil Malmaison Cédex (FR)
(72) Inventeur: Rojey, Alexandre, 92500 Rueil Malmaison (FR); Bertholin, Stéphane, 69100 Villeurbanne (FR); Giroudière, Fabrice, 69530 Orlienas (FR); Lenglet, Eric, 92500 Rueil Malmaison (FR)

(56) Documents cités:
- WO-A-02/02220
- WO-A-03/070629
- WO-A-20/04083115
- DE-A1- 3 345 088
- FR-A- 1 490 005
- US-A- 4 714 593

## Description

### Domaine de l'invention:

L'objet de l'invention concerne la production de gaz de synthèse à partir de gaz naturel ou d'hydrocarbures légers: méthane, éthane, propane, butane, voire des hydrocarbures ayant moins de 10 atomes de carbone, ainsi que leurs mélanges.

Le gaz de synthèse est un mélange composé principalement (après élimination de l'eau) d'hydrogène, de monoxyde de carbone et de dioxyde de carbone. Il contient souvent de petites quantités d'hydrocarbures résiduels, typiquement de méthane.

Le gaz de synthèse peut être utilisé pour produire de l'hydrogène. Il peut être également utilisé pour produire des composés liquides par conversion chimique, par exemple des oxygénés (méthanol, diméthyl-éther ...), ou des hydrocarbures, notamment oléfiniques ou paraffiniques.

### Art antérieur:

On connait déja plusieurs procédés de production de gaz de synthèse, notamment le vaporéformage, l'oxydation partielle et le procédé autotherme.

Le vaporéformage (connu sous le sigle SMR qui provient de l'anglais "steam methane reforming" qui signifie "réformage du méthane à la vapeur"), consiste à faire réagir la charge sur un catalyseur en présence de vapeur d'eau pour obtenir un gaz de synthèse qui contient principalement (hors vapeur d'eau) un mélange d'oxyde de carbone et d'hydrogène. Cette opération est endothermique. Elle est réalisée typiquement en faisant circuler la charge, en présence de vapeur d'eau dans des tubes remplis de catalyseur, (généralement un catalyseur au nickel, par exemple comprenant de 6 à 25% poids de nickel déposé sur un support comprenant principalement de l'alumine, ou un mélange d'alumine et d'un ou plusieurs autres composés réfractaires). Les tubes sont chauffés par radiation dans des fours tubulaires. Les points les plus chauds de la flamme doivent être maintenus suffisamment distants des tubes pour qu'il n'y ait pas de surchauffe excessive et de ce fait, les fours utilisés sont encombrants et coûteux.

Il a par ailleurs déja été proposé de réaliser un vaporéformage dans un réacteur-échangeur (ceci signifiant que la chaleur est transmise majoritairement par convection, et non majoritairement par radiation comme dans un four), le milieu réactionnel étant chauffé indirectement par des fumées à très haute température.

L'utilisation de fumées à très haute température dans un échangeur se révèle toutefois délicate.

L'oxydation partielle (connue sous le sigle POX qui provient de l'anglais "partial oxydation" qui signifie oxydation partielle), consiste à former par combustion en conditions sous-stoechiométriques un mélange à haute température - généralement entre 1000°C et 1600 °C - d'hydrocarbures et d'air ou d'oxygène, pour oxyder les hydrocarbures et obtenir le gaz de synthèse. Ce procédé utilise des quantités importantes d'oxygène, lorsqu'on ne peut utiliser de l'air (lorsqu'on recherche un gaz de synthèse sans azote).

Le procédé autotherme réalise une oxydation partielle immédiatement suivie par un vaporéformage catalytique en régime adiabatique à haute température, par exemple dans la plage de températures de sortie: 900°C -1000°C. Ce procédé réalise une combinaison en série des deux modes réactionnels précédents. Il consomme moins d'oxygène que le procédé POX, mais nécessite un lit catalytique.

Par ailleurs, on connait déja un procédé divulgué dans la demande internationale WO 03/070629 A1 dans lequel un effluent d'oxydation partielle est utilisé pour chauffer un réacteur de vaporéformage (réacteur-échangeur).

Un but du procédé selon l'invention est de produire du gaz de synthèse à partir d'hydrocarbures légers dans une installation beaucoup plus compacte qu'une installation de vaporéformage, nécessitant typiquement moins d'oxygène que les procédés POX et autotherme. Le procédé selon l'invention est donc très performant du point de vue énergétique et ceci avec un encombrement réduit et un coût d'investissement limité.

Selon l'une de ses variantes préférées, l'invention permet aussi de réduire les températures les plus élevées utilisées tout en maintenant l'efficacité énergétique à un niveau élevé. Ceci permet de limiter les investissements et d'augmenter la fiabilité et la durée de vie de l'installation.

### Définition sommaire de l'invention:

Pour atteindre les buts précités, l'invention utilise une combinaison particulière de vaporéformage (SMR) et d'oxydation partielle (POX). Mais contrairement au procédé autotherme, qui utilise un mélange de tous les réactifs et une conversion chimique du mélange, le procédé selon l'invention réalise une POX à l'oxygène, et un échange de chaleur indirect pour transférer la chaleur excédentaire de cette POX à un réacteur-échangeur SMR de type réacteur-échangeur compact. Ceci permet de pousser plus loin le vaporéformage et de favoriser ainsi la production d'H2 et de CO. Le potentiel en H2 (hydrogène obtenu après conversion du CO à la vapeur) est donc accru, et le besoin en oxygène moindre vis-à-vis du procédé autotherme.

Les deux gaz de synthèse obtenus (par POX et par SMR) sont alors typiquement mélangés, ce qui accroit la quantité de gaz de synthèse obtenu par rapport aux procédés utilisant la combustion d'air pour chauffer les tubes de vaporéformage. Enfin, le CO2 produit peut être aisément récupéré en aval car il n'est pas dilué par d'importants volumes d'azote.

Du point de vue de la compacité, celle-ci est excellente: D'une part, le gaz de synthèse produit par POX possède de meilleures propriétés de transfert de chaleur par convection que des fumées de combustion à l'air. D'autre part, la POX peut être mise en oeuvre sous pression élevée (sans nécessiter la compression de l'azote de l'air), ce qui augmente de façon très importante la compacité et réduit la surface d'échange nécessaire (il y a augmentation des échanges convectifs en phase gazeuse avec la pression). Ainsi, les surfaces nécessaires au transfert de chaleur et donc les investissements peuvent être notablement réduits.

Il a également été découvert selon une variante caractéristique de la présente invention, qu'il est possible de réaliser l'oxydation partielle dans une installation beaucoup plus compacte et économique, en la réalisant dans le réacteur-échangeur, beaucoup plus compact qu'un four, à condition d'éviter la présence d'une flamme au niveau des tubes de vaporéformage, dont les points chauds doivent être éliminés car ils peuvent conduire à la détérioration ou la destruction de ces tubes.

L'invention permet de réaliser l'opération de vaporéformage dans un réacteur-échangeur en développant une réaction d'oxydation partielle sans flamme, à l'intérieur de la calandre du réacteur-échangeur, tout du moins au niveau des tubes de vaporéformage.

### Description détaillée de l'invention:

Les références indiquées ci-après correspondent à celles utilisées plus loin pour la description des figures annexées. Dans ce qui suit, on utilisera indifféremment les expressions "combustion partielle" et "oxydation partielle" ou "POX".

L'invention propose un procédé de production d'un gaz de synthèse SG à partir d'une charge globale F constituée d'hydrocarbures et optionnellement de composés recyclés, F comprenant une première charge F1, une seconde charge F2 , dans lequel:
- on soumet un courant comprenant la première charge F1 additionnée de vapeur d'eau à un vaporéformage dans au moins un réacteur-échangeur multitubulaire R comprenant une pluralité de tubes réactionnels contenant un catalyseur de vaporéformage et une calandre contenant ces tubes, pour la production d'un premier gaz de synthèse SG1 ;
- on chauffe principalement par convection les tubes réactionnels par circulation dans ladite calandre d'un fluide HF de chauffage externe de ces tubes, dans lequel HF est un courant sensiblement exempt d'azote, d'oxydation partielle à l'oxygène de la seconde charge F2 sous une pression comprise entre 0,5 et 12 MPa, pour la production d'un second gaz de synthèse SG2,
- on produit le gaz de synthèse SG par mélange de SG1 et SG2. Le mélange de SG1 et SG2 est typiquement réalisé en aval du réacteur-échangeur R, mais peut également être réalisé dans la calandre de R, par exemple sensiblement à l'une des extrémités de cette calandre ou de R.

Les charges F1 et F2 peuvent être diverses, gazeuses et/ou liquides. Elles peuvent être de même composition ou de compositions différentes. Le plus souvent toutefois, les charges F1 et F2 sont essentiellement gazeuses sous une pression de 2MPa et à la température de 20°C. Typiquement, F1 et F2 sont de composition identique et proviennent d'un gaz naturel, ou purifié, ou d'un mélange gazeux composé principalement, en % molaire, d'hydrocarbures ayant moins de 5 atomes de carbone.
F1 et F2 (ou l'une d'entre elles seulement, par exemple F2) peuvent également comprendre un courant de recyclage, notamment un courant comprenant une fraction séparée en aval telle qu'une fraction de SG séparée par adsorption et désorption à balancement de pression (gaz de purge d'une adsorption dite "PSA") pour la production d'hydrogène. De telles fractions recyclées contiennent souvent du CO et du méthane non transformé, ainsi typiquement que du CO2.

On obtient, grâce à l'oxydation partielle sous pression à l'oxygène, un fluide thermique HF sous pression élevée ayant des propriétés d'échange thermique très élevées permettant de transférer une quantité de chaleur importante dans un réacteur-échangeur relativement compact.

Selon l'invention, la POX est réalisée de façon étagée:
Typiquement, le fluide de chauffage HF comprend au moins un premier courant d'oxydation partielle à l'oxygène d'une première partie de F2, souvent additionnée de vapeur d'eau, que l'on fait circuler dans le réacteur-échangeur pour le chauffage des tubes réactionnels, puis que l'on mélange dans au moins une zone d'oxydation partielle complémentaire avec au moins une seconde partie de F2 et de l'oxygène, ajoutés seuls ou en mélange, afin d'augmenter la température dudit premier courant, puis on fait circuler le courant du mélange ainsi obtenu dans la calandre de R pour un chauffage complémentaire des tubes réactionnels avant de sortir dudit réacteur-échangeur R.
Le courant de mélange obtenu est aussi le courant de chauffage HF. HF désigne ainsi un courant de composition, de débit et de température évolutifs au cours de sa circulation dans la calandre de R.

On peut généralement utiliser une, ou deux, ou trois, voire entre 4 et 8 zones complémentaires d'oxydation partielle. De façon préférée on utilise entre 1 et 4 zones complémentaires d'oxydation partielle, et de façon très préférée 2 ou 3 zones complémentaires d'oxydation partielle. Cette combustion étagée permet de transférer une quantité importante de chaleur, apportée par incréments de température, avec des refroidissements intermédiaires lors du transfert de chaleur aux tubes réactionnels, sans atteindre les températures particulièrement élevées qui seraient obtenues en réalisant toute l'oxydation partielle en une étape.

Ces zones d'oxydation partielle (initiale et/ou complémentaires) peuvent être internes et/ou externes à la calandre du réacteur-échangeur R.

Selon une première variante caractéristique du procédé selon l'invention, la ou les zone(s) d'oxydation partielle complémentaire est (sont) disposée(s) à l'intérieur de la calandre du réacteur-échangeur R. La zone d'oxydation partielle initiale peut également être une zone interne au réacteur-échangeur R.

Typiquement, la zone d'oxydation partielle complémentaire est une zone exempte de tubes réactionnels et sensiblement contigue à la paroi interne de la calandre du réacteur-échangeur R.

De façon très préférée on évite la formation de flammes au contact des tubes réactionnels.

Selon un premier mode de réalisation de l'oxydation partielle, celle-ci peut être faite, dans le cas de cette première variante caractéristique de l'invention, en limitant la présence de flammes dans une ou plusieurs zone(s) exemple(s) de tubes réactionnels, notamment contigue(s) à la paroi interne de la calandre (37) du réacteur-échangeur R. On peut notamment utiliser un brûleur à flamme plate, ou courte de type connu, et/ou de multiples brûleurs de petite dimensions donnant par conséquent des flammes plus petites.

Selon un autre mode de réalisation de l'oxydation partielle, on injecte en un point à l'intérieur de la calandre du réacteur-échangeur une partie au moins de F2 et de l'oxygène, de préférence en présence de vapeur d'eau, dans des conditions de turbulence et/ou de recirculation suffisantes pour obtenir une oxydation partielle (initiale et/ou complémentaire) en régime de combustion homogène dans une zone au moins de la calandre du réacteur-échangeur R.

Pour réaliser des conditions de combustion aussi homogènes que possible, on peut opérer à des températures relativement modérées (par exemple moins de 1200°C, voire de 1150°C) permettant de réaliser plus facilement une combustion (oxydation) homogène sans flamme. La plage de conditions (concentrations, températures) pour l'obtention d'un tel régime de combustion homogène peut être déterminée précisément par une modélisation de la combustion et/ou par des essais en faisant varier la recirculation des gaz et la turbulence). La combustion homogène est en effet favorisée par un mélange très turbulent des réactifs et par leur recirculation. De préférence, on met en oeuvre l'oxydation partielle en régime homogène à proximité immédiate des tubes de vaporéformage et on réalise un transfert thermique immédiat de la chaleur d'oxydation vers les tubes de vaporéformage. L'oxydation partielle en régime homogène peut alors se poursuivre au niveau des tubes de vaporéformage car elle ne génère pas de points chauds susceptibles de les détériorer. Il devient alors possible de rendre plus homogènes les températures dans le réacteur-échangeur, ce qui permet d'optimiser les transferts thermiques, de réduire le nombre de zones complémentaires d'oxydation partielle et/ou de limiter la température locale maximale effective du fluide HF, ce qui est favorable du point de vue de la durée de vie des équipements.

Selon un troisième mode de l'oxydation partielle, on injecte en un point à l'intérieur de la calandre du réacteur-échangeur une partie au moins de F2 et de l'oxygène, additionnée de préférence de vapeur d'eau, en amont d'une zone de combustion catalytique, dans des conditions ou la température du mélange obtenu est inférieure à la température ou la combustion se produit avec une flamme. La combustion catalytique est une technique bien connue dans le domaine de la combustion, et peut utiliser divers catalyseurs. On peut par exemple se référer aux brevets ou demandes de brevet US20050081443; US 5,980,843 ; US 5,405,260 ; EP 0 689 870 B1 ; EP 0 712 661 B1..Les zones de températures initiales et finales permettant de réaliser dans les meilleures conditions une combustion catalytique peuvent être déterminées par des essais, pour un catalyseur donné. Les températures initiales (avant combustion) préférées sont inférieures à 900°C, et souvent comprises entre 800°C et 880°C. Les températures finales (après combustion) préférées sont inférieures à 1000°C, et souvent comprises entre 800°C et 980°C. Aussi, on peut avantageusement limiter la combustion catalytique à la partie la moins chaude du réacteur-échangeur R. Ainsi, si le courant comprenant la charge F1 additionnée de vapeur d'eau rentre à une extrémité du réacteur-échangeur, la zone de combustion catalytique est située typiquement dans la première moitié du réacteur-échangeur relativement à cette extrémité.

Selon une seconde variante caractéristique du procédé selon l'invention, la ou les zone(s) complémentaire(s) d'oxydation partielle (42, 44), et/ou la zone d'oxydation partielle initiale peuvent être disposée(s) à l'extérieur de la calandre (37) du réacteur-échangeur R. Cette option conduit à une réalisation moins compacte, mais autorise des dimensionnements standards pour les brûleurs et les zones d'oxydation.

Il est également possible de combiner une ou deux zones d'oxydation partielle externes (par exemple la zone initiale) et une ou deux ou plus généralement plusieurs zones d'oxydation partielle internes.

La circulation du fluide de chauffage HF peut être réalisée de différentes façons.

Le plus souvent, le courant comprenant la charge F1 additionnée de vapeur d'eau circule dans le réacteur-échangeur essentiellement selon une direction, et le fluide de chauffage HF circule au moins globalement à contre-courant par rapport à F1 (c'est-à-dire soit à contre-courant pur, HF circulant parallèlement aux tubes, soit localement en courant croisé, mais globalement à contre-courant d'ensemble).

Une circulation à co-courant est toutefois possible. Dans ce cas, si le courant comprenant la charge F1 additionnée de vapeur d'eau circule dans le réacteur-échangeur essentiellement selon une direction, le fluide de chauffage HF circule au moins globalement à co-courant par rapport à F1 (co-courant pur ou d'ensemble).

Les deux gaz de synthèse SG1 et SG2 sont le plus souvent mélangés à l'extérieur du réacteur-échangeur. On peut cependant en alternative réaliser leur mélange dans le réacteur-échangeur, notamment à l'une des extrémités. Cette configuration est plus facile à réaliser si F1 et HF circulent à co-courant, les deux gaz SG1 et SG2 étant produits à la même extrémité du réacteur-échangeur R.

Les pressions respectives P1 et P2 de SG1 et SG2 en sortie du réacteur-échangeur réalisent les conditions suivantes:
0,8 MPa < P1 < 12 MPa ; de préférence 1,5 MPa < P1 < 5 MPa ; et de façon très préférée, 1,8 MPa < P1< 4,5 MPa ;
0,8 MPa < P2< 12 MPa ; de préférence 1,5 MPa < P2< 5 MPa; et de façon très préférée, 1,8 MPa < P1< 4,5 MPa ;

Généralement, les pressions P1 et P2 sont voisines: I P2-P1I < 0,35 MPa; de préférence I P2-P1I < 0,30 MPa; et de façon très préférée, I P2-P1I < 0,25 MPa.

Le plus souvent P2 > P1. Souvent, SG2, en sortie du réacteur-échangeur R échange de la chaleur avec le courant comprenant la charge F1 additionnée de vapeur d'eau pour le préchauffage final ou un vaporéformage partiel (ou prévaporéformage) de ce courant avant son entrée dans le réacteur-échangeur R. SG2 subit donc typiquement une perte de charge avant son mélange avec SG1, et typiquement, P2>P1.

En général, SG2, en sortie du réacteur-échangeur R échange de la chaleur avec le courant comprenant la charge F1 additionnée de vapeur d'eau, pour le vaporéformage partiel de ce courant avant son entrée dans le réacteur-échangeur R, dans un réacteur-échangeur de chaleur (primaire, typiquement différent de R et référencé ci-après 2b), puis est mélangé au courant SG1 sortant du réacteur-échangeur R pour former un gaz de synthèse SG qui préchauffe dans un échangeur de chaleur (référencé ci-après 2a) le courant comprenant la charge F1 additionnée de vapeur d'eau juste en amont du réacteur-échangeur (2b). On utilise ainsi de façon efficace le potentiel thermique de SG1, relativement plus froid, et SG2, relativement plus chaud et fournissant les calories à relativement haute température nécessaire au vaporéformage partiel préliminaire. Ce pré-vaporéformage, de mise en oeuvre similaire à celle du vaporéformage, dans un réacteur-échangeur à tubes contenant un catalyseur de vaporéformage est typiquement réalisé à des températures inférieures de 100°C à 200°C à celles du vaporéformage.

La charge F1 additionnée de vapeur d'eau est typiquement préchauffée entre 500°C et 700°C (et de préférence entre 580 et 680°C) avant son entrée dans le réacteur-échangeur R, la température de SG1 en sortie du réacteur-échangeur R est comprise entre 800°C et 950°C (et de préférence entre 820 et 900°C), et la température de SG2 en sortie du réacteur-échangeur R est comprise entre 850°C et 1150°C et de préférence entre 900°C et 1050°C.
L'invention concerne également un procédé de production d'hydrogène à partir d'un gaz de synthèse SG ainsi produit.

L'invention sera mieux comprise à la lecture de la description des figures annexées dans laquelle:
La figure 1 représente un schéma simplifié de réalisation du procédé selon l'art antérieur.
La figure 2 représente un schéma simplifié de réalisation du procédé selon l'invention, représentant de façon détaillée un réacteur-échangeur comportant des zones d'oxydation partielle internes.
La figure 3 représente une coupe du réacteur-échangeur de la figure 2.
La figure 4 représente un autre schéma simplifié de réalisation du procédé selon l'invention, représentant de façon détaillée un réacteur-échangeur comportant des zones d'oxydation partielle externes.
Les figures 5a et 5b représentent des schémas simplifiés de réalisation du procédé selon l'invention, dans des installations comportant plusieurs réacteur-échangeurs.

Les références d'éléments correspondants dans les différentes figures sont identiques.

### Description des figures:

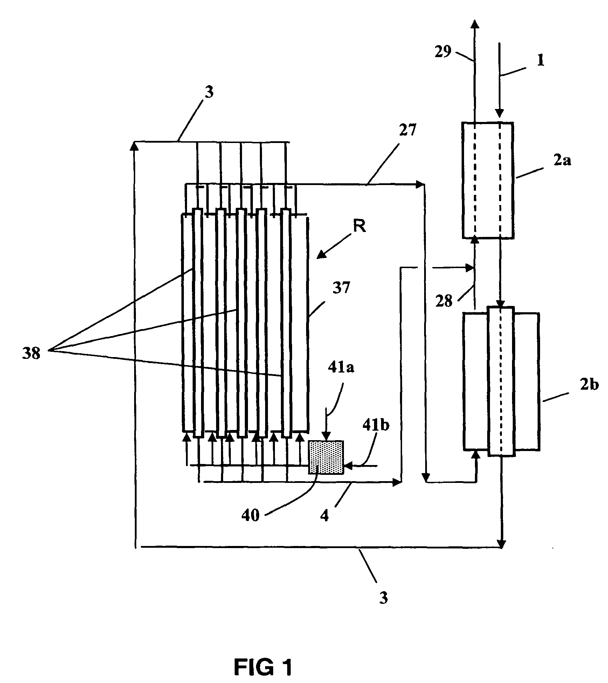

On se réfère maintenant à la figure 1.

Le courant comprenant la charge F1 additionnée de vapeur d'eau, c'est-à-dire la charge de vaporéformage, est un mélange d'un gaz généralement épuré, comprenant typiquement plus de 80% molaire de méthane et de 2 à 15% d'éthane, et de vapeur d'eau avec un rapport molaire H2O/F1 typiquement compris entre 1,8 et 3,5. Ce courant entre par la ligne 1 dans l'échangeur de préchauffe 2a, puis traverse le réacteur-échangeur 2b dans lequel est réalisé un pré-vaporéformage à température de sortie relativement modérée, typiquement comprise entre 650°C et 770°C, de préférence entre 670°C et 740°C. Le réacteur-échangeur 2b est un échangeur multi-tubulaire à tubes contenant un catalyseur de vaporéformage, par exemple l'un des catalyseurs décrits dans les exemples du brevet US 4,906,603. En sortie du réacteur-échangeur 2b, le courant comprenant la charge F1 additionnée de vapeur d'eau, partiellement converti en gaz de synthèse, alimente par la ligne 3 le réacteur-échangeur principal R, lui aussi multi-tubulaire à tubes contenant un catalyseur de vaporéformage, typiquement de même type que celui du réacteur-échangeur 2b. Ce courant est alors réparti dans une pluralité de tubes réactionnels 38 disposés à l'intérieur de la calandre 37 du réacteur-échangeur R, puis, après vaporéformage, sort du réacteur-échangeur R par la ligne 4, formant un premier gaz de synthèse SG1 et est refroidi dans l'échangeur 2a en mélange avec le deuxième gaz de synthèse SG2.

Une autre partie F2 de la charge globale F alimente via une entrée d'hydrocarbures 41 a une chambre d'oxydation partielle 40, alimentée par ailleurs en oxygène par la ligne 41 b. La charge F2 et/ou l'alimentation en oxygène peuvent typiquement être additionnés de vapeur d'eau (par exemple 20% à 50% molaire de vapeur d'eau) pour limiter les risques de formation de carbone (suies). Les températures de sortie de la chambre d'oxydation partielle 40 sont typiquement comprises entre 1100°C et 1250°C, de préférence entre 1140°C et 1200°C. Le contrôle de cette température peut être réalisé par modulation du rapport molaire O2/(hydrocarbures de F2), souvent compris entre 0,48 et 0,85.

Le fluide HF de chauffage ainsi formé entre dans le réacteur-échangeur R, ou une combustion sans flamme peut éventuellement se poursuivre, et transfert une partie notable de la chaleur d'oxydation partielle aux tubes réactionnels 38, permettant ainsi le vaporéformage de F1. Le courant HF sort du réacteur-échangeur R via la ligne 27 pour former un second gaz de synthèse SG2. Ce gaz de synthèse SG2, dont la température en sortie du réacteur-échangeur R est encore élevée, par exemple de l'ordre de 1000°C, alimente le réacteur-échangeur 2b de pré-vaporéformage de la charge F1, ou il est utilisé comme fluide de chauffage, puis sort de 2b via la ligne 28, est mélangé avec le gaz de synthèse SG1 circulant dans la ligne 4, puis le mélange SG ainsi formé est refroidi dans l'échangeur 2a dont il sort par la ligne 29. Le gaz de synthèse SG peut alors subir des traitements complémentaires tels qu'un refroidissement plus poussé, une conversion du CO à la vapeur, une conversion chimique etc... Grâce à 2a et 2b, l'installation de la figure 1 réalise une bonne récupération thermique, en particulier sur l'effluent le plus chaud du réacteur-échangeur R, c'est-à-dire SG2.

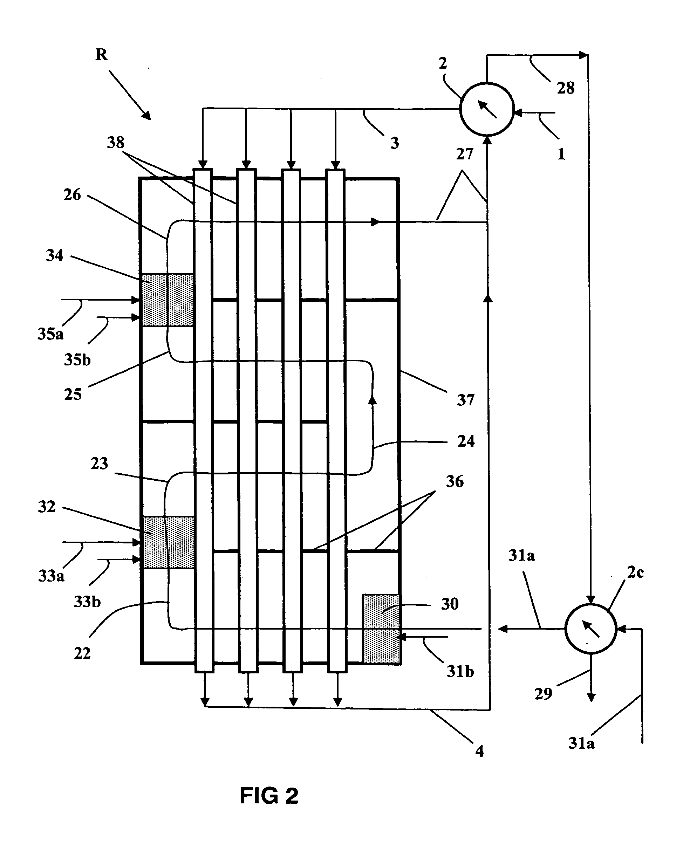

On se réfère maintenant à la figure 2 selon l'invention. Le réacteur-échangeur R de la figure 2 comprend 3 chambres, ou zones d'oxydation partielle en série, de telle sorte que cette oxydation partielle étagée permette une transmission de chaleur plus importante aux tubes 38 de vaporéformage et/ou l'utilisation de températures maximales plus basses pour HF. Ces 3 zones: 30 (zone initiale), 32 et 34 (zones complémentaires) sont internes à la calandre 37 de R. Ces zones 30, 32, et 34 sont alimentées en hydrocarbures de la charge F2 (typiquement additionnés de vapeur d'eau) via respectivement les lignes 31a, 33a, et 35a. Elles sont également alimentées en oxygène via respectivement les lignes 31 b, 33b, et 35b. Il peut également y avoir présence de vapeur d'eau dans les mêmes conditions que pour l'installation de la figure 1.

Le fluide de chauffage circule à l'intérieur de R à courant croisé et contre-courant global en suivant la ligne de circulation figurant sur la figure 2 et indiquée par les références 22, 23, 24, 25, et 26. Cette circulation est imposée par la présence d'entretoises ou chicanes 36 dans le réacteur-échangeur R, de façon analogue aux entretoises ou chicanes de la calandre d'un échangeur de chaleur à tubes et calandre conventionnel.

La récupération de chaleur sur les effluents du réacteur-échangeur R du dispositif de la figure 2 est également performante, mais diffère de celle de la figure 1: On utilise également deux échangeurs, qui sont référencés 2 et 2c mais seul l'échangeur 2 transmet de la chaleur à la charge F1 de vaporéformage alors que l'échangeur 2c transmet de la chaleur à la charge F2 d'oxydation partielle, additionnée de vapeur d'eau. On obtient donc un préchauffage de plusieurs courants alimentant R, et en particulier de la charge de vaporéformage et de la charge F2 d'oxydation partielle. On pourrait également préchauffer les fluides ajoutés à HF au cours de l'oxydation partielle étagée, en particulier les hydrocarbures et/ou la vapeur d'eau, et/ou préchauffer l'oxygène.

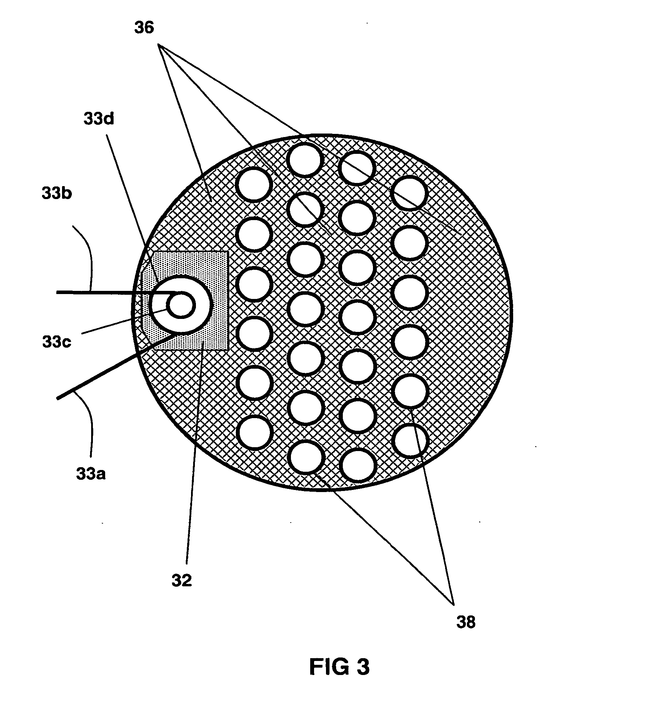

La figure 3, qui représente une vue de dessus d'une coupe du réacteur-échangeur R de la figure 2 au dessus de la zone 32 montre en vue de dessus l'une des entretoises 36. La zone d'oxydation partielle 32 comprend un brûleur avec introduction d'hydrocarbures et d'oxygène via les lignes 33a et 33b qui alimentent tangentiellement deux tubes concentriques 33d et 33c pour créer un mélange rapide par vortex contrarotatifs.

Les extrémités du réacteur-échangeur R de la figure 2 comprennent typiquement des fonds bombés conventionnels, non représentés pour des raisons de clarté de la figure, et R englobe la totalité des tubes réactionnels 38.

L'installation de la figure 2 ne représente qu'un échangeur de chaleur 2, mais pourrait également comprendre des réacteurs-échangeurs et/ou échangeurs de chaleur tels que 2a et 2b de l'installation de la figure 1.

Le réacteur-échangeur R des figures 2 et 3 ne représente qu'un type de réacteur-échangeur utilisable pour la mise en oeuvre du procédé selon l'invention et d'autres types de réacteur-échangeur R peuvent être utilisés sans sortir du cadre de l'invention, y compris des réacteurs-échangeurs à "tubes en baillonnettes". Dans ce type de réacteurs-échangeurs, chacun des tubes réactionnels 38 comprend deux tubes concentriques et la charge de vaporéformage circule successivement dans l'espace annulaire puis dans le tube central interne, ou dans le sens de circulation inverse, le courant d'entrée de F1 et le courant SG1 respectivement entrant et sortant à la même extrémité de R.

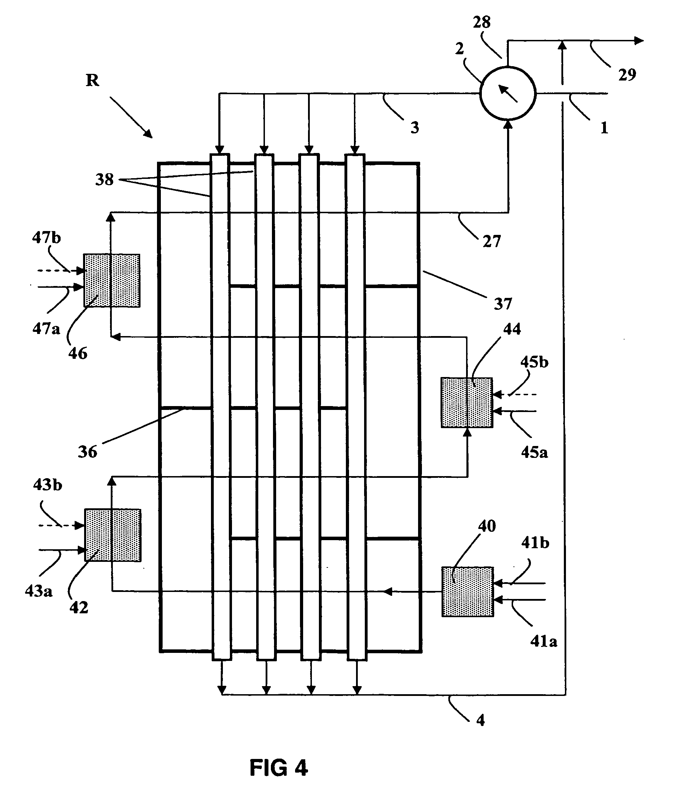

L'installation de la figure 4 est assez proche de celle de la figure 2, mais utilise des zones d'oxydation partielle externes et non internes à R, permettant, au prix d'une réalisation moins compacte, d'utiliser des brûleurs et/ou des zones d'oxydation standards sans problèmes d'encombrement. Ces zones 40, 42, et 44 sont alimentées en hydrocarbures de F2 via respectivement les lignes 41a, 43a, et 45a. Elles sont également alimentées en oxygène via respectivement les lignes 41 b, 43b, et 45b. Il peut également y avoir présence de vapeur d'eau dans les mêmes conditions que pour l'installation de la figure 1.

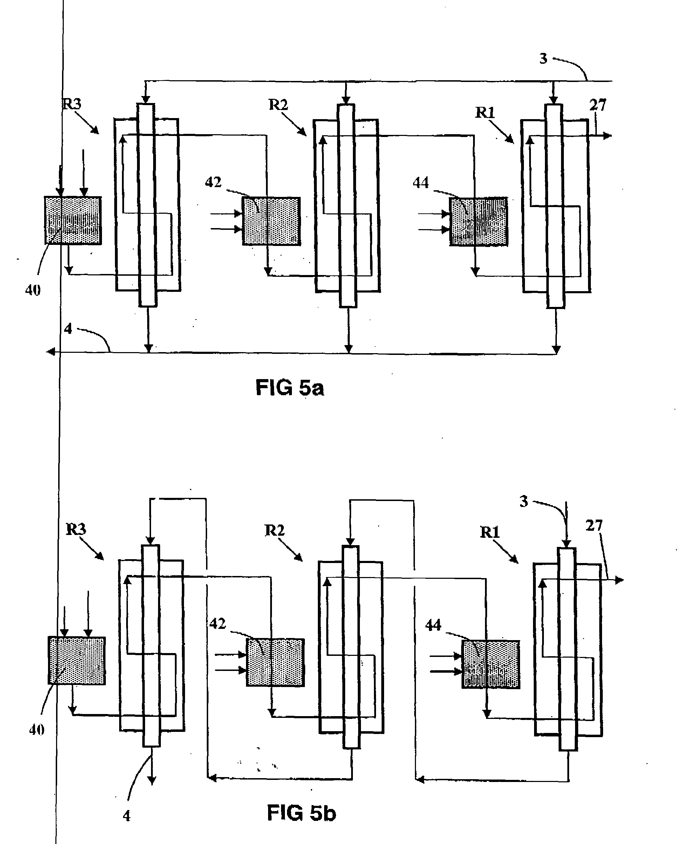

La figure 5a représente une installation comprenant trois réacteurs-échangeurs R1, R2 et R3, traversés en parallèle par des parties du courant comprenant F1, et traversés en série par un courant HF d'oxydation partielle étagée, avec réchauffage intermédiaire de HF entre deux réacteurs-échangeurs successifs. Une telle installation pourrait comprendre non pas trois, mais deux, quatre, ou de façon générale plusieurs réacteurs-échangeurs Ri.

L'installation de la figure 5b est assez proche de celle de la figure 5a, mais utilise pour le courant comprenant F1 une circulation en série (vaporéformage étagé) dans les échangeurs R1, R2, R3, à contre-courant d'ensemble avec le courant d'oxydation partielle HF, également étagé. Cette configuration permet d'obtenir une récupération thermique et une efficacité énergétique très élevée, le réacteur-échangeur R1, qui réalise un pré-vaporéformage pouvant être opéré à relativement basse température. De même, l'installation de la figure 5b pourrait comprendre non pas trois, mais deux, quatre, ou de façon générale plusieurs réacteurs-échangeurs Ri.

### Exemple:

On simule la production d'un gaz de synthèse SG sous pression de 2,5 MPa à partir d'un gaz naturel dans une installation du type de celle de la figure 2. Les charges F1 et F2 sont de composition identique (gaz naturel assimilé à du méthane).

Les conditions d'entrée (ligne 1) sont les suivantes: F1 = gaz naturel, avec un débit (de méthane) de 50 000 NM³/h; F1 est additionné par H2O (vapeur d'eau) avec un rapport molaire H2O/F1 = 3 (H2O et F1 en % molaire). Le courant F1 + H2O est préchauffé à 600°C dans l'échangeur 2, puis alimente le réacteur-échangeur R sous une pression de 2,5 MPa qui est la pression de l'installation (pour la simulation, on n'a pas pris en compte les pertes de charges). Après vaporéformage catalytique, avec une température de sortie de 850°C (dans la ligne 4), le premier gaz de synthèse SG1 obtenu est mélangé avec le second gaz de synthèse SG2 circulant dans la ligne 27, le mélange SG1 + SG2 alimentant l'échangeur de chaleur 2.

Dans la première zone d'oxydation partielle 30, on alimente via la ligne 31 a 100 433 NM³/h de méthane additionné avec de la vapeur d'eau saturante (rapport H2O/Méthane = 1 en % molaire), et via la ligne 31 b, 64 650 NM³/h d'oxygène, pour former, par oxydation partielle, un premier fluide de chauffage HF à 1150°C, qui est refroidi à 1000°C dans le réacteur-échangeur R avant d'être réchauffé dans la seconde zone complémentaire d'oxydation partielle 32. Dans cette zone 32, on alimente 20 883 NM³/h de méthane et 19 776 NM³/h d'oxygène, avec de la vapeur d'eau (H2O/Méthane = 1 en % molaire). Le méthane est alimenté à 20°C, et la vapeur d'eau aux conditions de vapeur saturante. Cette oxydation partielle complémentaire remonte la température de HF à 1150°C. HF transmet à nouveau de la chaleur aux tubes 38, et sa température retombe à 845°C.

On alimente alors dans la seconde zone complémentaire d'oxydation partielle 34 un débit de 28 285 NM³/h de méthane et 12 993 NM³/h d'oxygène, avec de la vapeur d'eau (H2O/Méthane = 1 en % molaire), dans les mêmes conditions que pour la zone 32. Cette zone 34 est une zone d'oxydation catalytique, et utilise un catalyseur comprenant 5% poids de rhodium tel que celui décrit dans l'exemple 1 de la demande de brevet US 2002/0004450 A1, ou celui de l'exemple 1 du brevet US 5,510,056. Le mélange global avec HF de cette oxydation partielle complémentaire catalytique (ce mélange étant également un fluide HF) remonte la température initiale de HF à 900 °C. HF transmet à nouveau de la chaleur aux tubes 38, et sa température retombe à 750°C à sa sortie de R, formant un second gaz de synthèse SG2 qui circule dans la ligne 27.

Ce second gaz de synthèse SG2 est mélangé avec SG1 pour former le gaz de synthèse SG global, qui est refroidi à 662°C dans l'échangeur de chaleur 2 puis rejoint via la ligne 28 l'échangeur de chaleur 2c dans lequel il est refroidi à 546°C. Cet échangeur 2c permet de préchauffer la charge F2 additionnée de vapeur d'eau à 500°C.

Les gaz de synthèse SG1, SG2, et le gaz de synthèse final SG obtenu (qui comprend 469 182 NM³ de H2+CO) ont les compositions suivantes, en % molaire, et en tenant compte de H2O :

| % molaire | SG1 : effluent de vaporéformage (ligne 4) | SG2 : effluent de POX (lignes 27, 28) | SG : gaz de synthèse final (ligne 29) |
|---|---|---|---|
| H2 | 47,9 | 45 | 46 |
| CO | 8,9 | 16,3 | 13,8 |
| CO2 | 5,3 | 7,5 | 6,8 |
| CH4 | 3,7 | 2,3 | 2,8 |
| H2O | 34,2 | 28,9 | 30,6 |

Le gaz de synthèse SG peut être soumis en aval à une conversion du CO à la vapeur, et à une purification finale pour produire de l'hydrogène. Il peut aussi être utilisé, souvent après ajustement du rapport H2/CO (par exemple par séparation de l'hydrogène en excès) pour une conversion chimique, par exemple en alcools ou autres oxygénés, ou en oléfines et/ou en paraffines.

## Revendications

1. Procédé de production d'un gaz de synthèse SG à partir d'une charge globale F constituée d'hydrocarbures et optionnellement de composés recyclés, ladite charge globale F comprenant une première charge F1, une seconde charge F2 , dans lequel:
• on soumet un courant comprenant la première charge F1 additionnée de vapeur d'eau à un vaporéformage dans au moins un réacteur-échangeur multitubulaire (R) comprenant une pluralité de tubes réactionnels (38) contenant un catalyseur de vaporéformage et une calandre contenant ces tubes, pour la production d'un premier gaz de synthèse SG1 ;
• on chauffe principalement par convection lesdits tubes réactionnels (38) par circulation dans ladite calandre d'un fluide HF de chauffage externe de ces tubes, dans lequel ledit fluide de chauffage HF est un courant sensiblement exempt d'azote, d'oxydation partielle à l'oxygène de la seconde charge F2 sous une pression comprise entre 0,5 et 12 MPa, pour la production d'un second gaz de synthèse SG2, ledit fluide de chauffage HF comprenant au moins un premier courant d'oxydation partielle à l'oxygène d'une première partie de la seconde charge F2, que l'on fait circuler dans le réacteur-échangeur pour le chauffage des tubes réactionnels, puis que l'on mélange dans au moins une zone d'oxydation partielle complémentaire (32, 34, 42, 44) avec au moins une seconde partie de la seconde charge F2 et de l'oxygène, ajoutés seuls ou en mélange, afin d'augmenter la température dudit premier courant, puis on fait circuler le courant du mélange ainsi obtenu dans la calandre dudit réacteur-échangeur multitubulaire (R) pour un chauffage complémentaire des tubes réactionnels avant de sortir dudit réacteur-échangeur multitubulaire (R).
• on produit le gaz de synthèse SG par mélange du premier gaz de synthèse SG1 et du second gaz de synthèse SG2.

2. Procédé selon la revendication 1 dans lequel ladite zone d'oxydation partielle complémentaire (32, 34) est disposée à l'intérieur de la calandre (37) du réacteur-échangeur multitubulaire (R).

3. Procédé selon la revendication 2 dans lequel ladite zone d'oxydation partielle complémentaire (32, 34) est une zone exempte de tubes réactionnels et sensiblement contigue à la paroi interne de la calandre (37) du réacteur-échangeur multitubulaire (R).

4. Procédé selon l'une des revendications 1 à 3 dans lequel on injecte en un point à l'intérieur de la calandre du réacteur-échangeur une partie au moins de la seconde charge F2 et de l'oxygène, de préférence en présence de vapeur d'eau, dans des conditions de turbulence suffisantes pour obtenir une oxydation partielle complémentaire en régime de combustion homogène dans une zone au moins de la calandre du réacteur-échangeur multitubulaire (R).

5. Procédé selon l'une des revendications 1 à 4 dans lequel on injecte en un point à l'intérieur de la calandre du réacteur-échangeur une partie au moins de la seconde charge F2 et de l'oxygène, additionnée de préférence de vapeur d'eau, en amont d'une zone d'oxydation partielle complémentaire catalytique, dans des conditions ou la température du mélange obtenu est inférieure à la température où la combustion se produit avec une flamme.

6. Procédé selon la revendication 5 dans lequel ledit courant comprenant la charge F1 additionnée de vapeur d'eau rentre dans le réacteur-échangeur multitubulaire (R) à l'une de ses extrémités, et ladite zone de combustion catalytique est située dans la première moitié du réacteur-échangeur multitubulaire (R) relativement à cette extrémité.

7. Procédé selon la revendication 1 dans lequel ladite zone d'oxydation partielle complémentaire (42, 44) est disposée à l'extérieur de la calandre (37) du réacteur-échangeur multitubulaire (R).

8. Procédé selon l'une des revendications précédentes dans lequel ledit courant comprenant la première charge F1 additionnée de vapeur d'eau circule dans le réacteur-échangeur essentiellement selon une direction, et ledit fluide de chauffage HF circule au moins globalement à contre-courant par rapport à la première charge F1.

9. Procédé selon l'une des revendications 1 à 7 dans lequel ledit courant comprenant la première charge F1 additionnée de vapeur d'eau circule dans le réacteur-échangeur essentiellement selon une direction, et ledit fluide de chauffage HF circule au moins globalement à co-courant par rapport à la première charge F1.

10. Procédé selon l'une des revendications précédentes dans lequel les deux gaz de synthèse SG1 et SG2 sont mélangés à l'extérieur du réacteur-échangeur multitubulaire, leurs pressions respectives P1 et P2 en sortie du réacteur-échangeur multitubulaire réalisant les conditions: 0,8 MPa < P1< 12 MPa ; 0,8 MPa < P2< 12 MPa ; et I P2-P1I < 0,35 MPa.

11. Procédé selon l'une des revendications précédentes dans lequel SG2, en sortie du réacteur-échangeur multitubulaire (R) échange de la chaleur avec ledit courant comprenant la première charge F1 additionnée de vapeur d'eau, pour le préchauffage final ou un vaporéformage partiel de ce courant avant son entrée dans le réacteur-échangeur multitubulaire (R).

12. Procédé selon la revendication 11 dans lequel le second gaz de synthèse SG2, en sortie du réacteur-échangeur multitubulaire (R), échange de la chaleur avec le courant comprenant la première charge F1 additionnée de vapeur d'eau, pour le vaporéformage partiel de la première charge F1 avant son entrée dans le réacteur-échangeur multitubulaire (R), dans un réacteur-échangeur de chaleur (2b), puis SG2 est mélangé au courant SG1 sortant du réacteur-échangeur multitubulaire (R) pour former le gaz de synthèse SG qui préchauffe dans un échangeur (2a) ledit courant comprenant la première charge F1 additionnée de vapeur d'eau, juste en amont du réacteur-échangeur (2b).

13. Procédé selon l'une des revendications précédentes dans lequel ledit courant comprenant la première charge F1 additionnée de vapeur d'eau est préchauffé entre 500°C et 700°C avant son entrée dans le réacteur-échangeur multitubulaire (R) la température du premier gaz de synthèse SG1 en sortie du réacteur-échangeur multitubulaire (R) est comprise entre 800°C et 950°C, et la température de second gaz de synthèse SG2 en sortie du réacteur-échangeur multitubulaire (R) est comprise entre 850°C et 1150°C.

14. Procédé de production d'hydrogène à partir d'un gaz de synthèse SG issu du procédé selon l'une des revendications précédentes.

## Claims

1. A process for producing a synthesis gas, SG, from a general feed F constituted by hydrocarbons and optionally from recycled compounds, said general feed F comprising a first feed F1 and a second feed F2, in which:
• a stream comprising the first feed F1 supplemented with steam undergoes steam reforming to produce a first synthesis gas SG1 in at least one multi-tube reactor-exchanger R comprising a plurality of reaction tubes (38) containing a steam reforming catalyst and a shell containing said tubes;
• said reaction tubes (38) are heated principally by convection by circulating in said shell a heating fluid HF external to said tubes, in which said heating fluid HF is a substantially free of nitrogen partial oxidation stream of the second feed F2 with oxygen at a pressure in the range 0.5 to 12 MPa, to produce a second synthesis gas SG2, said heating fluid HF comprising at least one first partial oxidation stream with oxygen of a first portion of the second feed F2 which is circulated in the reactor-exchanger to heat the reaction tubes, then it is mixed in a complementary partial oxidation zone (32, 34, 42, 44) with at least one second portion of the second feed F2 and oxygen, added alone or as a mixture, to increase the temperature of said first stream, then the stream of the mixture obtained circulates in the shell of said multi-tube reactor-exchanger (R) to provide complementary heat to the reaction tubes before leaving said multi-tube reactor-exchanger (R);
• synthesis gas SG is produced by mixing of a first synthesis gas SG1 and a second synthesis gas SG2.

2. A process according to claim 1, in which said complementary partial oxidation zone (32, 34) is disposed inside the shell (37) of the multi-tube reactor-exchanger (R).

3. A process according to claim 2, in which said complementary partial oxidation zone (32, 34) is a zone which is free of reaction tubes and substantially contiguous with the internal wall of the shell (37) of the multi-tube reactor-exchanger (R).

4. A process according to one of claims 1 to 3, in which at least a portion of the second feed F2 and oxygen, preferably in the presence of steam, are injected at a point inside the shell of the reactor-exchanger under turbulent conditions sufficient to obtain homogeneous complementary partial oxidation in at least one zone of the shell of the multi-tube reactor-exchanger (R).

5. A process according to one of claims 1 to 4, in which at least a portion of the second feed F2 and oxygen, preferably supplemented with steam, are injected at a point inside the shell of the reactor-exchanger R upstream of a complementary catalytic partial oxidation zone, under conditions in which the temperature of the mixture obtained is lower than the temperature in which combustion occurs with a flame.

6. A process according to claim 5, in which said stream comprising the first feed F1 supplemented with steam enters the multi-tube reactor-exchanger (R) at one end of the multi-tube reactor-exchanger (R), and said catalytic combustion zone is located in the first half of the multi-tube reactor-exchanger (R) relative to said end.

7. A process according to claim 1, in which said complementary partial oxidation zone (42, 44) is disposed outside the shell (37) of the multi-tube reactor-exchanger (R).

8. A process according to one of the preceding claims, in which said stream comprising the first feed F1 supplemented with steam circulates in the reactor-exchanger in essentially one direction, and said heating fluid HF circulates at least as an overall counter-current with respect to the first feed F1.

9. A process according to one of claims 1 to 7, in which said stream comprising the first feed F1 supplemented with steam circulates in the reactor-exchanger essentially in one direction, and said heating fluid HF circulates at least as an overall co-current with respect to the first feed F1.

10. A process according to one of the preceding claims, in which the two synthesis gases SG1 and SG2 are mixed outside the multi-tube reactor-exchanger, their respective pressures P1 and P2 at the outlet from the multi-tube reactor-exchanger satisfying the conditions: 0.8 MPa < P1 < 12 MPa; 0.8 MPa < P2 < 12 MPa; and |P2 - P1| < 0.35 MPa.

11. A process according to one of the preceding claims, in which SG2, at the outlet from the multi-tube reactor-exchanger (R), exchanges heat with said stream comprising the first feed F1 supplemented with steam, for final pre-heating or partial steam reforming of said stream before its entry into the multi-tube reactor-exchanger (R).

12. A process according to claim 11, in which the second synthesis gas SG2, at the outlet from the multi-tube reactor-exchanger (R), exchanges heat with the stream comprising the first feed F1 supplemented with steam, for partial steam reforming of the first feed F1 prior to its entry into the multi-tube reactor-exchanger (R) in a reactor-heat exchanger (2b), then SG2 is mixed with the stream SG1 leaving the multi-tube reactor-exchanger (R) to form the synthesis gas SG which pre-heats, in an exchanger (2a), said stream comprising the first feed F1 supplemented with steam, just upstream of the reactor-exchanger (2b).

13. A process according to one of the preceding claims, in which said stream comprising the first feed F1 supplemented with steam is pre-heated to between 500°C and 700°C before it enters the multi-tube reactor-exchanger (R), the temperature of the first synthesis gas SG1 at the outlet from the multi-tube reactor-exchanger (R) is in the range 800°C to 950°C, and the temperature of the second synthesis gas SG2 at the outlet from the multi-tube reactor-exchanger (R) is in the range 850°C to 1150°C.

14. A process for producing hydrogen from a synthesis gas SG derived from the process according to one of the preceding claims.

## Patentansprüche

1. Verfahren zur Herstellung eines Synthesegases SG aus einer Gesamtbeschickung F, die aus Kohlenwasserstoffen und optional aus recyclierten Verbindungen besteht, wobei die Gesamtbeschickung F eine erste Beschickung F1, eine zweite Beschickung F2 umfasst, wobei:
• ein Strom, der die erste Beschickung F1 umfasst, die mit Wasserdampf angereichert ist, einer Dampfreformierung in mindestens einem Rohrbündel-Austauschreaktor (R) unterzogen wird, der eine Vielzahl an Reaktionsrohren (38) umfasst, die einen Katalysator zum Dampfreformieren und einen Kalander umfassen, der diese Rohre enthält, zur Produktion eines ersten Synthesegases SG1;
• die Reaktionsrohre (38), hauptsächlich durch Konvektion, durch Zirkulation eines Heizfluids HF in dem Kalander außerhalb dieser Rohre erwärmt werden, wobei das Heizfluid HF ein im Wesentlichen stickstofffreier Strom zur Partialoxidation der zweiten Beschickung F2 mit Sauerstoff unter einem Druck im Bereich zwischen 0,5 und 12 MPa, ist, zur Produktion eines zweiten Synthesegases SG2, wobei das Heizfluid HF, das mindestens einen ersten Strom zur Partialoxidation mit Sauerstoff eines ersten Teils der zweiten Beschickung F2 umfasst, das in dem Austauschreaktor zur Erwärmung der Reaktionsrohre zirkuliert wird, dann in mindestens einer zusätzlichen Zone zur Partialoxidation (32, 34, 42, 44) mit mindestens einem zweiten Teil der zweiten Beschickung F2 und mit Sauerstoff, allein oder als Mischung zugefügt, gemischt wird, um die Temperatur des ersten Stroms zu erhöhen, wobei der Strom der so erhaltenen Mischung dann in dem Kalander des Rohrbündel-Austauschreaktors (R) zur zusätzlichen Erwärmung der Reaktionsrohre zirkuliert, bevor er den Rohrbündel-Austauschreaktor (R) verlässt.
• das Synthesegas SG durch Mischung des ersten Synthesegases SG1 und des zweiten Synthesegases SG2 produziert wird.

2. Verfahren nach Anspruch 1, wobei die zusätzliche Zone zur Partialoxidation (32, 34) im Innern des Kalanders (37) des Rohrbündel-Austauschreaktors (R) angeordnet ist.

3. Verfahren nach Anspruch 2, wobei die zusätzliche Zone zur Partialoxidation (32, 34) eine Zone ist, die frei von Reaktionsrohren ist, und im Wesentlichen entlang der inneren Wand des Kalanders (37) des Rohrbündel-Austauschreaktors (R) verläuft.

4. Verfahren nach einem der Ansprüche 1 bis 3, wobei an einem Punkt im Innern des Kalanders des Austauschreaktors mindestens ein Teil der zweiten Beschickung F2 und Sauerstoff eingespritzt wird, bevorzugt in Gegenwart von Wasserdampf, unter Turbulenzbedingungen, die ausreichend sind, um eine zusätzliche Partialoxidation im homogenen Verbrennungsmodus in mindestens einer Zone des Kalanders des Rohrbündel-Austauschreaktors (R) zu erhalten.

5. Verfahren nach einem der Ansprüche 1 bis 4, wobei an einem Punkt im Innern des Kalanders des Austauschreaktors mindestens ein Teil der zweiten Beschickung F2 und Sauerstoff, bevorzugt mit Wasserdampf angereichert, stromaufwärts einer Zone zur zusätzlichen katalytischen Partialoxidation eingespritzt wird, unter Bedingungen, bei denen die Temperatur der erhaltenen Mischung unterhalb der Temperatur liegt, bei der die Verbrennung mit einer Flamme stattfindet.

6. Verfahren nach Anspruch 5, wobei der Strom, der die Beschickung F1 umfasst, die mit Wasserdampf angereichert ist, in den Rohrbündel-Austauschreaktor (R) an einem seiner Enden eintritt, und die Zone zur katalytischen Verbrennung, bezogen auf dieses Ende, in der ersten Hälfte des Rohrbündel-Austauschreaktors (R) liegt.

7. Verfahren nach Anspruch 1, wobei die zusätzliche Zone zur Partialoxidation (42, 44) außerhalb des Kalanders (37) des Rohrbündel-Austauschreaktors (R) angeordnet ist.

8. Verfahren nach einem der vorhergehenden Ansprüche, wobei der Strom, der die erste Beschickung F1 umfasst, die mit Wasserdampf angereichert ist, in dem Austauschreaktor im Wesentlichen gemäß einer Richtung zirkuliert, und das Heizfluid HF im Verhältnis zur ersten Beschickung F1 mindestens überwiegend in entgegen gesetzter Richtung zirkuliert.

9. Verfahren nach einem der Ansprüche 1 bis 7, wobei der Strom, der die erste Beschickung F1 umfasst, die mit Wasserdampf angereichert ist, in dem Austauschreaktor im Wesentlichen gemäß einer Richtung zirkuliert, und das Heizfluid HF im Verhältnis zur ersten Beschickung F1 mindestens überwiegend in gleicher Richtung zirkuliert.

10. Verfahren nach einem der vorhergehenden Ansprüche, wobei die beiden Synthesegase SG1 und SG2 außerhalb des Rohrbündel-Austauschreaktors gemischt werden, und deren jeweiliger Druck P1 und P2 am Ausgang des Rohrbündel-Austauschreaktors den folgenden Bedingungen entspricht: 0,8 MPa < P1 < 12 MPa; 0,8 MPa < P2< 12 MPa; und P2-P1 < 0,35 MPa.

11. Verfahren nach einem der vorhergehenden Ansprüche, wobei SG2 am Ausgang des Rohrbündel-Austauschreaktors (R) mit dem Strom, der die erste Beschickung F1 umfasst, die mit Wasserdampf angereichert ist, Wärme austauscht, zur letzten Vorerhitzung oder zur Partialdampfreformierung dieses Stroms vor seinem Eintreten in den Rohrbündel-Austauschreaktor (R).

12. Verfahren nach Anspruch 11, wobei das zweite Synthesegas SG2 am Ausgang des Rohrbündel-Austauschreaktors (R) mit dem Strom, der die erste Beschickung F1 umfasst, die mit Wasserdampf angereichert ist, zur Partialdampfreformierung der ersten Beschickung F1 vor deren Eintritt in den Rohrbündel-Austauschreaktor (R) in einem Wärmeaustauschreaktor (2b) Wärme austauscht, wobei SG2 dann mit dem Strom SG1 gemischt wird, der aus dem Rohrbündel-Austauschreaktor (R) austritt, um das Synthesegas SG zu bilden, das in einem Austauscher (2a) den Strom, der die erste Beschickung F1 umfasst, die mit Wasserdampf angereichert ist, direkt stromaufwärts des Austauschreaktors (2b) vorerhitzt.

13. Verfahren nach einem der vorhergehenden Ansprüche, wobei der Strom, der die erste Beschickung F1 umfasst, die mit Wasserdampf angereichert ist, vor seinem Eintritt in den Rohrbündel-Austauschreaktor (R) auf 500 °C bis 700 °C vorerhitzt wird, wobei die Temperatur des ersten Synthesegases SG1 am Ausgang des Rohrbündel-Austauschreaktors (R) im Bereich zwischen 800 °C und 950 °C liegt, und die Temperatur des zweiten Synthesegases SG2 am Ausgang des Rohrbündel-Austauschreaktor (R) im Bereich zwischen 850 °C und 1.150 °C liegt.

14. Verfahren zur Produktion von Wasserstoff aus einem Synthesegas SG, das aus dem Verfahren gemäß einer der vorhergehenden Ansprüche stammt.
